# EUROPEAN PATENT SPECIFICATION

(11) **EP 2 412 283 B1**
(45) Date of publication and mention of the grant of the patent: **13.08.2014**
(21) Application number: 11168694.5
(22) Date of filing: 03.06.2011
(51) Int. Cl.: A47J 37/04

(54) **A meat slicing apparatus, a method of using it and a preparation unit for use with the meat slicing apparatus**
Fleischschneidevorrichtung, Verfahren zu ihrer Verwendung und Vorbereitungsvorrichtung zur Verwendung mit der Fleischschneidevorrichtung
Appareil de découpe de viande, son procédé d'utilisation et unité de préparation à utiliser avec l'appareil de découpe de viande

(30) Priority: 30.07.2010 DK 201000106 U
(43) Date of publication of application: 01.02.2012
(73) Proprietor: Pusat, Mustafa, 4200 Slagelse (DK)
(72) Inventor: Pusat, Mustafa, 4200 Slagelse (DK); Pusat, Muhammet Nuri, 4200 Slagelse (DK)
(74) Representative: Holme Patent A/S

(56) References cited:
- EP-A1- 0 153 148
- WO-A1-2009/085022

## Description

The present invention relates to a meat slicing apparatus with a rotating meat holder comprising a supporting plate with a rod for securing a meat structure, where the rod has a first end attached to the supporting plate; a broiler with at least one heating section facing the meat structure for broiling the rotating meat structure; and a cutting means for cutting slices of meat from the rotating meat structure, which slices deposit on the surface of the supporting plate below the cutting means.

Such apparatus is especially suitable for preparing doner meat, which is to be understood by the person skilled in the art as meat, such as e.g. lamb, chicken or beef, that is stacked on a vertical rod, broiled/cooked/roasted during rotation of the rod, and subsequently cut off in slices.

Doner meat is normally prepared just before serving by broiling a coherent meat structure on a vertical spit, cutting off slices of meat by means of a handheld cutter and subsequently grilling the meat slices. Two heating steps are involved in order to minimize the risk of undercooking, which might result in food poisoning.

The probability of undercooking due to the human involvement can be reduced to a minor extent by having one or more of the doner meat preparation steps being performed by a machine, such as e.g. described in international patent publication no. WO 2009/085022, where the rotation of the meat supported by the base table and the position of the cutting knife in relation to the meat are controlled by the machine. The machine is designed to broil and cut off the supported meat in portions, where the amount of meat in each portion is determined by the user. After the preparation of a portion the machine is idle until the production of the next portion starts. As the movement of the cutting knife is controlled by the machine the thickness of the meat slices can be kept uniform. After a vertical downwards cut by the cutting knife, the cutting knife moves in the horizontal direction away from the supported meat in order to push any meat slices that has dropped onto the base table away from the base table and into the container located directly under the spit.

However the machine described in WO 2009/085022 still has many shortcomings that might result in undercooking or overcooking, with reduced meat quality as the overall unsatisfactory result. One problem is that the distance between the broiler and the meat is manually controlled by means of an adjustment arm/mechanism, which may result in overcooking or undercooking. Another problem is that the cutting knife can only push meat slices located directly under the cutting knife away from the base table, which means that slices falling onto the base table next to the cutting knife may be subjected to overcooking in the form of at least one additional rotation past the broiler.

The latter problem occurs when the diameter of the circular base table is larger than the diameter of the meat structure on the spit, which unavoidably will be the case at least when the meat closest to the spit is being cut off at the end of the processing of one meat structure, in which case the base table might retain some of the meat slices on top of the base table itself.

Hence, there is a need for a meat slicing apparatus having a controlled way of removing all cut off meat slices before they are rotated past the broiler in order to avoid overcooking.

The main aspect of the present invention is to provide an apparatus of the kind mentioned in the opening paragraph that minimizes the risk of overcooking a meat structure rotating on a spit in front of a broiler.

A second aspect of the present invention is to provide an apparatus of the kind mentioned in the opening paragraph that is capable of handling large meat structures in a continuous cooking process.

A third aspect of the present invention is to provide an apparatus of the kind mentioned in the opening paragraph that is scaled for industrial production.

A fourth aspect of the present invention is to provide an apparatus of the kind mentioned in the opening paragraph that can be utilizes in a fast, safe and efficient production method.

A fifth aspect of the present invention is to provide an apparatus of the kind mentioned in the opening paragraph by means of which it is possible to produce meat slices of substantially homogenous shape and cooking.

A sixth aspect of the present invention is to provide an apparatus of the kind mentioned in the opening paragraph, the use and structure of which complies with sanitary safety regulation.

A seventh aspect of the present invention is to provide a method for creating a meat structure suitable for use by the apparatus according to the present invention.

An eight aspect of the present invention is to provide a preparation unit for molding the meat structure for use in the apparatus according to the present invention.

The novel and unique way whereby these and other aspects are achieved according to the present invention consists in that the apparatus comprises:
- a remover for removing the deposited meat slices from the supporting plate by sweeping at least a circumferential area of the supporting plate during rotation of the meat structure,
- the sweeping area extends from the outer surface of the meat structure towards the periphery of the supporting plate,
- the remover is positioned with a sweeping edge at a predetermined fixed distance to the supporting plate during rotation of the meat structure, and
- a first displacement means adapted to keep the remover in contact with the meat structure during rotation of the meat structure.

In the following it is assumed that the axial position of the meat structure is fixed in relation to the rod of the meat holder during rotation. Unless stated otherwise it is also assumed that the meat structure has the form of a substantially circular cylinder extending along the rod. The radius of the cylindrical meat structure is defined as the distance from the center of the rod to the outer surface of the meat structure.

Thus the meat slicing apparatus according to the present invention advantageously comprises a remover that is displaceable arranged in relation to the outer surface of the meat structure for removing from the supporting plate deposited broiled meat slices during rotation of the meat structure. The remover has a meat contacting edge, and a sweeping edge for sweeping a circumferential area of the supporting plate which area extends from the outer surface of the meat structure towards the periphery of the supporting plate.

By means of the fist displacement means the remover is able to move independent of the movement of the cutting means. Sweeping is expediently facilitated by positioning the sweeping edge of the remover so that there is a constant distance, such as e.g. 1 mm, between the sweeping edge and the upper surface of the supporting plate during use of the meat slicing apparatus. This distance can e.g. be adjusted in accordance with the selected thickness of the meat slices, e.g. so that the meat slices cannot pass under the sweeping edge and be subjected to additional cooking by the broiler.

As meat slices are cut off the radius of the meat structure decreases and the first displacement means ensures that the remover is moved towards the outer surface of the meat structure as this radius decreases. In this way the remover is constantly in contact with the meat structure and the sweeping edge extends constantly along the upper surface of the supporting plate from the outer surface of the meat structure. The first displacement means is preferably adapted so that the contact between the remover and the meat structure does not have any substantial effect on the rotation itself.

In the preferred embodiment the cutting means is cutting off meat slices via a cutting movement in the axial direction of the rod during rotation of the meat holder, and the remover is positioned after the cutting means and before the broiler when seen in the direction of rotation of the meat holder. It is therefore the positioning of the remover in combination with the rotation of the supporting plate that results in the constant removal of the meat slices away from the supporting plate. Thus, cut off meat slices can only preform less than one rotation on the supporting plate before they hit the remover and is pushed off the supporting plate, thereby preventing overcooking and burning of sliced meat. Thus the obtained food product is well prepared and to the consumer's satisfactory. The meat slices are not cooked too much so that properties such as organoleptic properties, texture, and juiciness are inadequately affected, or too little so that microorganism survive and the meat slices slowly perish during storage.

The supporting plate rotates around the longitudinal axis of the rod, with the result that a circumferential area of the supporting plate is swept by the remover, where the radial extent of this area is determined by the extent of the sweeping edge in the radial direction over the supporting plate.

The remover is preferably displaced in the axial direction of the rod towards the outer surface of the meat structure when said meat structure rotates. The axial direction is preferably substantially perpendicular to the rod. Thus the remover is preferably orientated in a plane extending through the rotation axis of the rod, in which case the remover simply can be a flat plate with a straight sweeping edge, and another straight meat contacting edge extending along the outer surface of the meat structure.

Alternatively, the remover can however also be curved and deviate from the radius of the supporting plate. In such an embodiment the remover can be shaped as a shovel, however other designs of remover blades or shovels are possible and intended within the scope of the present invention.

The meat holder is rotated by means of any suitable rotating means. In a preferred embodiment the rotating means comprises a circular rotation plate located below the meat holder and a motor for rotating said plate. The rotation plate comprises a central placed guide pin adapted to engage with a complementary shaped indentation in the bottom of the supporting plate, which ensures that the meat holder is positioned centrally in respect of the rotation means. The rotation plate further comprises a non-central placed locking pin adapted to engage with a complementary shaped indentation in the bottom of the supporting plate to ensure that the meat holder rotates with the same speed as the rotating plate.

In a preferred embodiment the length of the sweeping edge can extend from the outer surface of the meat structure and to at least the periphery of the supporting plate, or alternatively out over the periphery of the plate. This means that the length of the sweeping edge is the same or larger than the distance from the outer surface of the rod to the periphery of the supporting plate. Hereby is obtained the advantage that the remover will remove every meat slice that falls down onto the upper surface of the plate.

As meat slices not always fall directly downwards, the remover is advantageously located at a sufficient distance from the cutting means in order for the cut off meat slices to drop down onto the supporting plate on the side of the remover facing the cutting means and not on the side facing the broiler.

Advantageously the upper surface of the supporting plate is orientated in a horizontal plane with the rod extending perpendicular thereto in order to provide optimum support of the meat structure. In this configuration the meat structure is surrounding the vertically erected rod and resting on the supporting plate. Alternatively, the upper surface could be sloping downwards away from the rod so that gravity will help in the removal of the meat slices from the supporting plate. In this case the inclination of the supporting plate may not be so high that the meat structure is not sufficiently supported by the supporting plate, which support e.g. also depends on the weight and cohesion of the meat structure.

The shape of the supporting plate is preferably circular, but can alternatively be e.g. rectangular or hexagonal. In any case the sweeping area preferably extends at least to the point on the periphery of the supporting plate that is farthest from the center of the rod.

To make the removal of the meat slices more efficient, the remover can be provided with a meat conveyor moving along at least the sweeping edge of the remover. The movement of the meat conveyor along the sweeping edge in the direction from the meat structure towards the periphery of the supporting plate will push the deposited meat slices in this direction. In this way it is not only the rotation of the supporting plate that removes the meat slices from the supporting plate but also the moving meat conveyor.

The meat conveyor can e.g. be a chain conveyor or a belt conveyor with or without spaced partitions. Preferably the conveyor is an attachment chain conveyor such as e.g. known from bicycle chains. In case the remover comprises a flat plate with a sweeping edge the meat conveyor can preferably be provided close to any of the flat blade and the sweeping edge or both.

In an even more preferred embodiment where the meat conveyor is a chain conveyor, a number of flat sweeper blades are mounted substantial evenly around the chain. The sweeper blades are mounted on the side of the chain and oriented in such a way that they are standing upright with respect to the upper surface of the supporting plate and extends away from the chain. In this way the chain conveyor itself can move pass the upper surface of the supporting plate when rotating, and the sweeper blades increases the sweeping effect of the chain conveyor.

To avoid human involvement the displacement of the first displacement means can be based on data from a sensor detecting the distance between the remover and the meat structure. The measurements by the sensor and the associated displacements of the remover are made at suitable time intervals during rotation of the meat structure, so that the remover at no time is at a distance from the outer surface of the meat structure that allows meat slices to pass by the remover. Said time interval could e.g. be every second or with the same frequency as the cutting frequency of the cutting means.

Alternatively the displacement of the first displacement means can be based on data from any kind of sensor capable of measuring the radius of the meat structure, which together with the known initial distance between the remover and the center of the meat structure can be used to maintain the desired contact between the remover and the outer surface of the meat structure during rotation of the meat structure so that no meat slices pass by the remover.

In a preferred embodiment the sensor is a pressure sensor measuring the pressure exerted on the sensor by the meat structure. When the measured pressure drops below a predetermined value the displacement means is moved/displaced towards the meat structure until the measured pressure again is above said value.

The movement of the cutting means in relation to the supporting plate is preferably adapted so that the cutting means do not come into contact with the plate in order to avoid damage to the cutting means. Therefore the cutting means, or more precisely the cutting blade(s) of the cutting means, stops its cutting movement, in the axial direction of the rod, just above the supporting plate, e.g. a distance between 1 and 20 mm above the supporting plate.

The consequence of this restriction of the movement of the cutting means is that the part of the meat structure closest to the supporting plate is not being cut off by the cutting means. Said part of the meat structure can however be scraped off the rotating meat structure and into meat slices by providing the remover with a scraping means located at the part of the sweeping edge closest to the meat structure during use. Thus the amount of meat waste during the production of meat slices is expediently reduced or even eliminated. The scraping means is preferably mounted in a fixed position on the remover or is an integral part of the remover, e.g. made integral by properly shaping of the remover during its manufacturing. In particular a flat plate or shovel can be provided with a protruding scraping means. It is the position of the remover in combination with the rotation of the meat structure that gives the result that meat slices are scraped off by the scraping means. The scraped off meat slices that deposit on the supporting plate will be removed therefrom by the remover in the same way as the meat slices cut off by the cutting means.

In this way the cutting means will be cutting in the direction along the longitudinal axis of the rod while the scraping means will be scraping in the transverse direction thereof. As the scraping means is kept at a constant distance from the supporting plate it is possible to scrape/cut off meat slices closer to the supporting plate the with the cutting means that constantly moves towards and away from the plate.

The scraping means is advantageously provided with a tapered edge with a similar shape as known from a chisel or a similar tapered shape, where the tapered edge is facing opposite the rotational direction of the meat holder and thereby cuts through the meat structure.

The size of the meat structure being secured to the meat holder is preferably adapted so that the periphery of the supporting plate extends beyond the outer surface of the meat structure during use of the meat slicing apparatus according to the present invention. In this way the meat structure is fully supported by the supporting plate, and meat slices falling down substantially along the outer surface of the meat structure under the influence of gravity, will land on the supporting plate at the intersection area between the outer surface of the meat structure and the plate, so that a controlled removal of the meat slices is obtained at all times.

The meat slices, that continuously are swept by the remover out over the periphery of the supporting plate can be collected by providing a receptacle below the supporting plate and extending, in the horizontal plane, beyond the periphery of the supporting plate in the area around the remover and cutting means. However, the apparatus can also be provided with a transport conveyor for receiving the meat slices falling out over the periphery of the supporting plate for subsequent transport of the meat slices to a receptacle. Thereby is advantageously obtained that the meat slices can be brought further away from the broiler and fast in order to reduce the risk of overcooking. The transport conveyor can be any kind of standard conveyor known to the person skilled in the art.

Besides the transport conveyor being located below the remover to receive meat slices being swept or pushed out over the periphery of the supporting plate at the location of the remover, it is also preferred that the transport conveyor is located at least below the part of the periphery of the supporting plate that extends from the location of the cutting means and to the location of the remover, so that any cut off meat slices that lands beyond the periphery of the supporting plate at this area fall onto the transport conveyor. Meat slices falling of the supporting plate in the vicinity of the cutting means will most often occur when then radius of the meat structure is close to the periphery of the supporting plate.

Advantageously the receptacle is located at a horizontal distance from the other parts of the meat slicing apparatus so that it is more easy for the user to subsequently bring the meat slices to the next step in the preparation procedure as the receptacle is easier to access. Said next step can e.g. be freezing or packaging of the meat slices. The receptacle can advantageously be perforated at its bottom in order to be able to separate grease from the meat slices before said next step. The cutting means can advantageously comprise a rotating cutting blade for engaging with and cutting of meat slices from the meat structure. However, as the rotation of the cutting blade results in undesired scattering of meat and fat it is desired to deflect such scattered meat and deposit it onto the supporting plate such that it becomes part of the collected meat being produced by the apparatus, and at the same time less scattering makes cleaning of the apparatus and the surroundings easier.

The scattering can be reduced by providing the cutting means with a shield or a meat deflector member that at least partly encircles the cutting edge of the rotating cutting blade. The shield or meat deflector member is preferably arranged in substantially the same plane as the cutting blade.

The shield or meat deflector member advantageously encircles the cutting member at least above a horizontal tangent through a lowermost point of the cutting blade in the cutting situation when the cutting blade rotates to cut meat slices from the meat structure. The shield or meat deflector member may preferably simply be a sufficiently rounded web or plate that is wider than the cutting edge of the cutting blade. Meat and fat that hit the shield or meat deflector member will to some degree under the influence of gravity fall onto the supporting plate and subsequently be removed by the remover.

By providing a predetermined radial distance between the periphery of the cutting blade and the shield, such as preferably 3 - 15 mm, more preferably 4 - 7 mm and most preferably 5 mm the likelihood of meat lumps becoming stucked between the shield or meat deflector member and the cutting blade is highly reduced. Having a very small distance, such as e.g. about 1 mm, means that more scattered meat would be caught, but at the same time increase the likelihood of meat getting stuck. Thus the predetermined radial distance is selected carefully in consideration of a.o. selected size and thickness of the meat slices and the nature of the meat.

The cutting axis of the cutting blade can be inclined in relation to the outer surface of the meat structure so that meat is only cut off during movements of the cutting blade towards the supporting plate.

Preferably the shield or meat deflector member can be pivotally mounted to be turned away from the cutting blade so that it is easier to exchange the cutting blade or to clean the cutting blade.

The cutting means can preferably be provided with a locking mechanism capable of engaging with the pivotally mounted shield or meat deflector member thereby keeping the shield or meat deflector member in the desired locked position during use of the cutting means.

The broiler has at least one heating section facing the meat structure, where each heating section is capable of radiating heat at a level sufficient to broil the meat structure. When seen in the axial direction of the rod, the heating section preferably has the same extent as the meat structure to provide a uniform surface cooking along the entire length of the meat structure. By increasing the width of the at least one heating section or by increasing the number of heating sections it is possible to obtain the same effective broiling of the surface of the meat structure at a higher rotational speed of the meat structure, which advantageously reduces the production time of the meat slices. Three heating sections, each with a width of 30 cm, are used in a preferred embodiment.

A broiler for broiling a meat structure on a rod, such as the one used in the meat slicing apparatus of the present invention, can therefore conveniently be provided with at least two heating sections positioned next to each other around the meat structure, as well as with means for controlling the angle between the at least two heating sections. By being able to change the mutual angle between the heating sections it is possible to change the direction in which each heating section is radiating heat, so that every part of the meat structure passing by the broiler is cooked at a more uniform temperature than if the heating sections were positioned in a straight line. In response to the decreasing radius of a meat structure during cooking the mutual angle between the heating sections can be changes so that each heating section radiate heat substantially in the direction towards the center axis of the meat structure. Thereby the heat is applied at a constant level to the surface of the meat structure to obtain a homogeneous heat application and broiling of the meat surface. So by, at a suitable time intervals during use of the apparatus, adapting said angle to the decreasing radius of the meat structure it is possible to direct as much heat energy as possible towards the meat structure and thereby increase the efficiency of the broiler.

In a preferred embodiment the at least two heating sections are connected in series by means of hinges, and the apparatus comprises control means for controlling the angle between the at least two heating sections.

The meat slicing apparatus is capable of preparing doner meat from meat structures having different radiuses and/or heights that can be fitted on the meat holder, thus the radius of the supporting plate and the height of the rod constitutes the dimensional limitations of meat structures. The at least one heating section can be divided into one or more subsections along the axis of the rod, so that it is possible to turn of the subsection(s) above the height of the meat structure in order to further save energy. The heating sections can e.g. be power by gas or electricity.

The meat slicing apparatus is designed to be used in industrial production, and is therefore capable of handling a meat structure of e.g. 500 - 800 kg., where at least 75 kg of meat slices can be produced per hour. The height of the rod can e.g. be 1000 - 1300 mm and the diameter of the circular supporting plate can be e.g. 800 mm.

A control system advantageously serves for making the meat slicing apparatus fully automatic. The control system facilitates individual adjustment or simultaneous adjustment of one or more of the distance between the meat structure and the broiler, the distance between the meat structure and the cutting means, and the distance between the meat structure and the remover. The control system is adapted, e.g. by utilizing an appropriate computer program, to keep the remover in contact with the meat structure, move the cutting means and the broiler towards the meat structure as the radius of the meat structure decreasing during use of the apparatus.

In order to reduce the human involvement in the operation of the apparatus during use, the apparatus preferably comprises a second displacement means for displacing the cutting means towards the meat structure during rotation of the meat structure, and/or a third displacement means for moving the broiler towards the meat structure during rotation of the meat structure.

The adjustments of distances and displacements made by any of the first, second or third displacement means can advantageously be based on real time data from a sensor measuring the radius of the meat structure at suitable time intervals during rotation of the meat structure. The real time data serves as input to the control system and calculates output data in response to which the first, second and third displacement means are activated to be displaced i the direction towards the exterior surface of the meat structure, and away from the rod once the meat structure has been entirely cut to meat slices. Once a new meat structure is arranged in the meat slicing apparatus and ready to be broiled the control system is reset and the process starts again.

Said real time data from the sensor can preferably also be used to control the angle between the at least two heating section by means of said control system.

In another embodiment any of the broiler, the cutting means and the remover each has their own sensor for measuring their individual distances to the outer surface of the meat structure, which provides a more precise measurement of each of the distances than the embodiment with only one sensor, however the overall effect of the control system is as described above.

The meat slicing apparatus can also be provided with a contact sensor, e.g. positioned on the frame, for ensuring that the cutting means can not be activated unless the cutting means is pivoted into its correct position. Another contact sensor can also be provided, e.g. positioned on the frame, for ensuring that the cutting means can not be activated unless the remover is in its correct position in contact with the meat structure.

The invention also relates to a method for slicing meat using the meat slicing apparatus of the present invention.

The method comprises the steps of:
- placing the meat holder with a meat structure on a rotating means, and
- moving any of the broiler, the cutting means and the remover to their start positions, and
- activating any of the rotating means, the broiler, the cutting means and/or the remover.

The meat holder, the broiler, the cutting means and the remover are preferably mounted on a common frame that facilitates identifying their start positions and serves to provide a stable overall structure when the heavy meat structure is loaded into the meat slicing apparatus according to the present invention. The frame can preferably be provided with an arm adapted to hold the free end of the rod in a fixed position, so that the meat holder is kept stable during use of the meat slicing apparatus. Either of the broiler, the cutting means and the remover can also be separate units as long as their initial start positions relative to the position of the meat holder is well-defined.

Preferably the cutting means and the remover each are pivotally mounted on the frame so that they can be turned away from the meat holder before the initial placement of the meat holder on a rotating means, and afterward be turned into their start positions. Turning the cutting means and the remover away also provides easier access to the different means of the apparatus during cleaning and maintenance. In an even more preferred embodiment the cutting means and the transport conveyor are connected and together pivotally mounted on the frame, so that they both can be turned away from the meat holder.

Once the meat structure are in place the meat holder are put in rotation and the broiler is activated. The rotation speed, the initial distance between the cutting means and the outer surface of the meat structure, and the initial distance between the broiler and the outer surface of the meat structure can be selected to have any appropriate value by an operator based on parameters such as meat composition, meat structure and the desired thickness of the meat slices to be cut off. The rotation speed of the meat holder can be set to match the degree of heating from the broiler.

When the outer surface of the meat structure is sufficiently cooked and therefore ready to be cut off, the cutting means and the remover is both activated. The activation of the remover involves displacing it towards the meat structure until its meat contacting edge is in contact with the meat structure.

Activation of the cutting means involves displacing the cutting means into the desired distance from the outer surface of the meat structure based on the desired and pre-selected thickness of the meat slices to be cut off. Based on the height of the meat structure the cutting means is set to cut from a height above the meat structure to a point close to the upper surface of the supporting plate.

As the radius of the meat structure decreases the control means keeps the desired and pre-selected distance from the outer surface of the meat structure to each of the broiler, the cutting means and the remover by controlling the first, second and third displacement means, respectively. In this way a uniform cooking, a constant thickness of the cut off meat slices and contact between the remover and the meat structure is obtained at all times during use of the meat slicing apparatus according to the present invention. In the embodiment with at least two heating sections, the control means can also adjust the mutual angle between the heating section as the radius of the meat structure decreases.

The method may further comprise the initial steps of
- providing a preparation unit for shaping the meat structure, which preparation unit comprises at least two pivotally interconnected compartment parts,
- placing the meat holder inside the preparation unit,
- closing the interconnected compartment parts to surround the meat holder so that the supporting plate defines the base of a moulding cavity wherein the rod extends,
- pouring meat for the meat structure into the moulding cavity,
- optionally freezing or at least cooling the meat in order to obtain a coherent meat structure, and
- moving the compartment parts to an open position and removing the meat holder with the frozen or cooled meat structure.

The preparation unit serves to create a meat structure with well-defined proportions and dimensions in order to perfectly fit into the meat slicing apparatus according to the present invention.

By means of the preparation unit the meat structure can be given a substantially even outer surface, so that error measurements of parameters originating from an uneven outer surface do not serve as input to the control means, and negatively affects the displacement of any displaceable and moveable means of the meat slicing apparatus.

Accordingly the inventions aims to maintain a well-defined distance between the various means of the apparatus so that meat slices that comply with consumer demand and food safety regulations can be produced. If e.g. the radius of a cylindrical meat structure deviates substantially at a certain height of the meat structure, the distance to the heating sections and the cutting means is not uniform, with the inevitable unpleasant result of inhomogeneous cooking and meat slices that are very thin at certain areas. Use of the preparation units solves this problem. Emphasize is made that although preferred, the meat structure need not be cylindrical. What is essential is that the meat structure has a well-defined shape and dimension, which is recognized and known to the meat slicing apparatus according to the present invention so that cutting means, broiler, and any of the displacing means can operate as described above.

The invention will be described in further details below with references to the accompanying drawing in which
Fig. 1 shows a perspective view of the principle of the meat slicing apparatus according to the present invention,
Fig. 2 shows a schematic side view of the meat slicing apparatus according to the invention,
Fig. 3 shows a schematic top view of the meat slicing apparatus shown in fig. 3,
Fig. 4 shows a close-up view of the remover from the side facing the cutting means, and where the remover is provided with a meat conveyor.
Fig. 5 shows a schematic perspective view of the remover provided with a pressure sensor,
Fig. 6 shows a perspective view of an embodiment of the cutting means, where the shield is shown in its active position,
Fig. 7 shows the same as in fig. 6 but with the shield in its inactive position,
Fig. 8 shows a perspective view of an embodiment of the cutting means with an additional shield, and
Fig. 9 shows a perspective view of the preparation unit according to the present invention.

The invention is described below with the assumption that the axial position of the meat structure is fixed in relation to the rod of the meat holder during rotation and that the meat structure has the form of a substantially circular cylinder extending along the rod. However, these assumption is not to be construed as limiting, as the axial position of the meat structure just as easily can be displaceable in relation to the rod of the meat holder during rotation and that the meat structure also can have other forms.

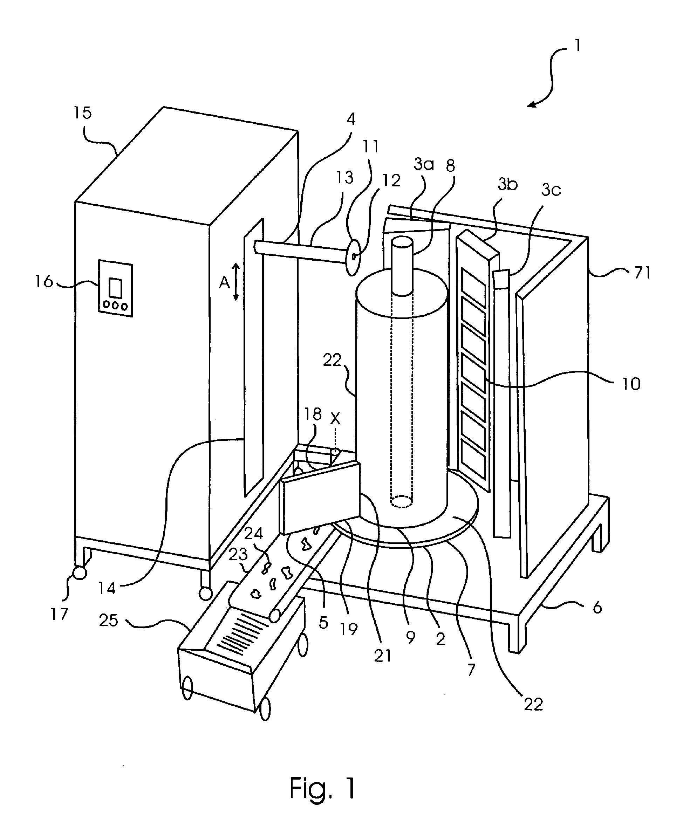

Fig. 1 shows a perspective view of the principle of the meat slicing apparatus 1 according to the present invention. Said meat slicing apparatus 1 consist basically of a meat holder 2, a broiler 26 with three heating section 3a,3b,3c, a rotating cutting means 4, and a remover 5, where the meat holder 2 is detachably mounted on the frame 6. The remover 5 can be mounted/attached to the frame 6 by any suitable means known in the art, e.g. screws and nails. Such means is not shown in fig. 1 The embodiment shown in fig. 1 is provided with a screen 71 located behind the heating sections 3a,3b,3c, which screen is for protection the surrounding against heat from the broiler 26.

The meat holder 2 has a horizontal oriented circular supporting plate 7 and a vertical orientated rod 8 for securing a meat structure 9, such that said meat structure is secured to the meat holder 2

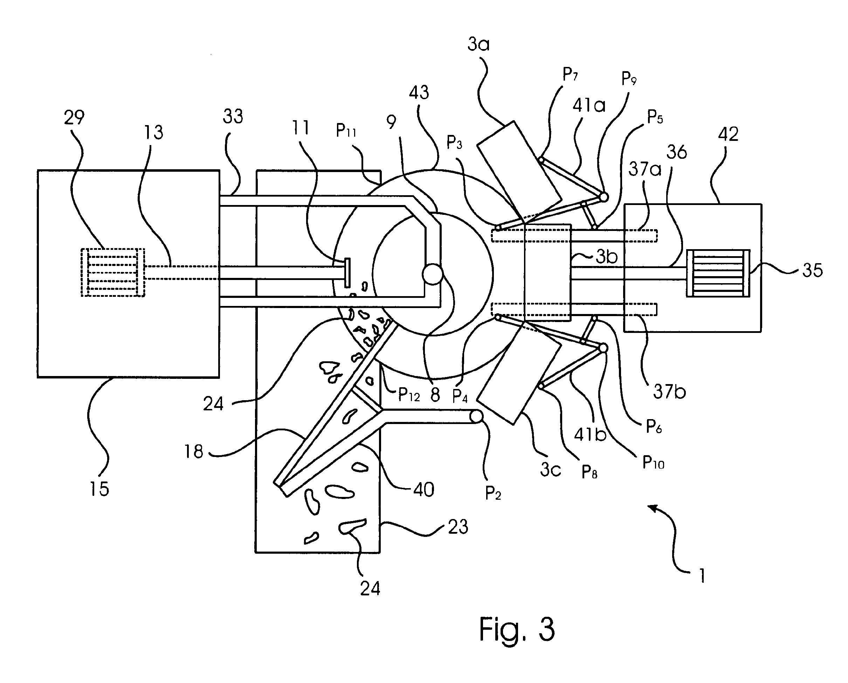

Each heating section 3a,3b,3c of the broiler 26 is facing toward the meat structure 9 and is divided into seven vertical subsections 10. For illustrative reason the heating sections 3a,3b,3c are in fig. 1 shown partly behind the meat structure, but it is understood that their preferred position is opposite the cutting means 4 as e.g. shown in fig. 3.

The rotating cutting means 4 has a cutting blade 11 attached to a rotatable axle 12 extending towards the meat structure 9. The axle 12 is encapsulated in a pipe 13, which is sealingly connected to a belt 14 that moves up and down along with the cutting means 4. The belt 14 is sealing mounted in the housing 15. The seals prevent meat and fat from entering the housing 15.

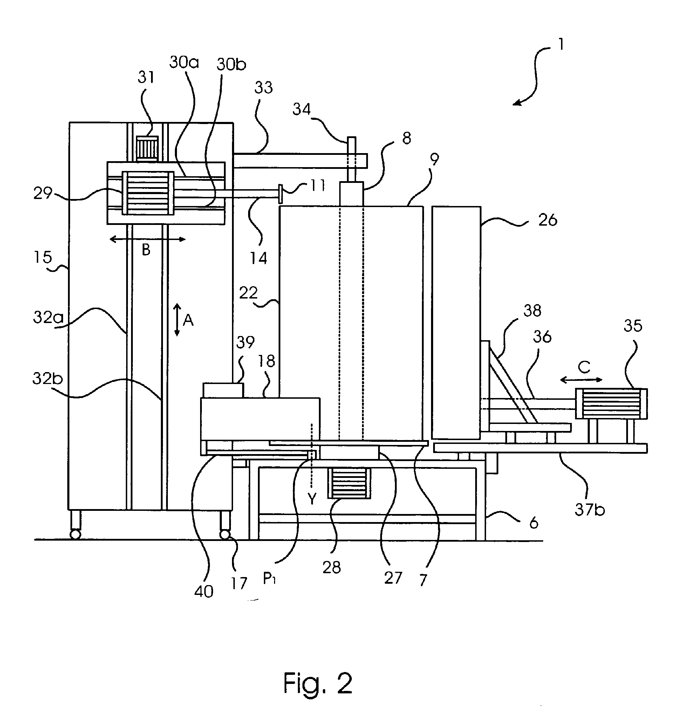

The cutting means 4 is powered and moved/displaced by means (shown in details in fig. 2) placed inside housing 15. The operator can control the different settings of the apparatus via a control panel 16, placed in a convenient location on the housing 15. The cutting means 4 is shown in an upper position above the meat structure 9 from where it during use is displaced downwards to cut off meat from the meat structure 9.

The housing 15 is provided with wheels 17 and is pivotally mounted on the frame 6 via a horizontal pivot axis X, thus making it easy for the operator to turn the housing 15 including the cutting means 4 away from the meat holder 2 during e.g. cleaning of the apparatus 1.

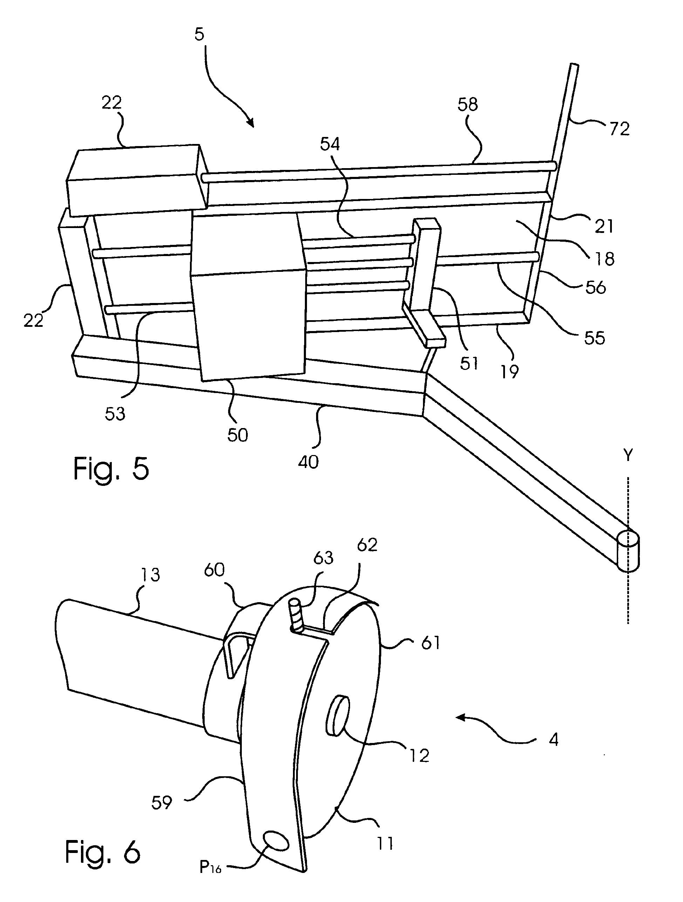

The remover 5 is pivotally mounted on the frame 6, however for illustrative reason the remover 5 is shown without the means (se however figs. 2 and 3) by which it is mounted. The remover 5 comprises a rectangular plate 18 orientated in the vertical plane with a straight sweeping edge 19 extending along the upper surface 20 of the supporting plate 7 and another straight edge 21 extending along the outer surface 22 of the meat structure 9. The remover 5 is also provided with the first displacement means (shown in fig. 5) adapted to displace the plate 18 towards the meat structure 9 when the radius of the meat structure 9 decreases as more and more meat are being cut off.
Fig. 1 also shows a transport conveyor 23 for transporting the cut off meat slices 24 to a receptacle 25 located at a suitable distance from the other components of the meat slicing apparatus 1.
Fig. 2 shows a second embodiment of the meat slicing apparatus 1, for like parts similar reference numbers have been used. The main differences between the embodiment shown in fig. 1 and in fig. 2 is that the broiler 26 has been provided with third displacement means in the form of a first motor 35 that via a drive rod 36 can displace the broiler 26 in the horizontal direction towards and away (arrow C) from the meat structure 9. For illustrative reason the transport conveyor 23 and the receptacle 25 are not shown. The plate 18 as shown in fig. 2 is located at angle with respect to the cutting means 4.

Rotating means 27 is located on the frame 6 and below the supporting plate 7. A second motor 28 powers the rotating means 27.

Fig. 2 also shows the inside of the housing 15. The components placed inside housing 15 is identical for both the embodiment in fig. 1 and fig. 2. As can be seen the third motor 29 rotates the cutting blade 11. The second displacement means in the form of a motor (not shown) moves the cutting means 4 via guide rods 30a,30b in the horizontal direction toward and away from the center of the meat holder 2 (arrow B). The fourth motor 31 moves the cutting means 4 via guide rods 32a,32b in the vertical direction along the outer surface 22 of the meat structure 9 (arrow A).

The free end of the rod 8 is attached to an arm 33 extending from the upper part of the housing 15 by means of a locking mechanism 34.

The broiler 26 moves along guide rods 37a,37b (shown in details in fig. 3) that are attached to the frame 6. The broiler 26 is attached to the guide rods 37a,37b by means of attachment means 38 arranged to move along the guide rods 37a,37b.

To avoid human involvement the displacement a distance detection sensor 39 for measuring the distance between the remover 5 and the outer surface 22 of the meat structure 9 is mounted on the rectangular plate 18. The measurements by the sensor 39 and the associated displacements of the remover 5 are made at suitable time intervals during rotation of the meat structure 9, so that the remover 5 at no time is at a distance from the outer surface 22 of the meat structure 9 that allows meat slices 24 to pass by the remover 5. Said time interval could e.g. be every second or with the same frequency as the cutting frequency of the cutting means 4.

The rectangular plate 18 of the remover 5 is pivotally mounted on the frame 6 via the pivoting rod 40 and is capable of turning around the pivot axis Y at point P where the pivoting rod 40 is attached to the frame 6.

Fig. 3 shows the meat slicing apparatus 1 with three heating sections 3a,3b,3c, which are connected in series by hinges (not shown).

The first motor 35 is able to displace the heating sections 3a,3b,3c in the horizontal direction towards and away from the center of the meat holder 2 along guide rods 37a,37b. By means of a system of arms 41a,41b the two outermost heating sections 3a,3c is turned in relation to the heating section 3b located in the middle as the first motor 35 displaces the heating sections 3a,3b,3c towards and away from the meat structure 9. The arms 41a,41b are pivotally attached to the frame 6 at points P₃,P₄, and pivotally attached to the attachment means 38 (not shown in fig. 3) points P₅,P₆, and pivotally attached to the heating sections 3a,3c at points P₇, P_{8'} and are able to pivot around the points P₉,P₁₀. In this way the individual heating sections is capable of being directed in different directions during the heating process. The first motor 35 is attached to the guide rods 37a,37b and thereby to the frame 6.

Fig. 3 shows that the transport conveyor 23 is partly located below the supporting plate 7 and partly extending beyond the periphery 43 of the supporting plate 7 when seen in the horizontal plane. The shown horizontal position of the transport conveyor 23 means that any meat slices 24 being swept or otherwise falls over the part of the periphery 43 of the supporting plate 7 extending from point P₁₁ to point P₁₂ will land on the transport conveyor 23. When the outer surface 22 of the meat structure 9 is close to the periphery 43 of the supporting plate 7 a substantial part of the cut off meat slices 24 will fall out over the periphery 43 in the area around the cutting means 4. As the radius of the meat structure 9 decreases more and more meat slices 24 will deposit on the upper surface 20 of the supporting plate 7 in the area below the cutting means 4, and subsequently be rotated toward the plate 18 where they will be swept from the supporting plate 7 and onto the transport conveyor 23. The receptacle 25 is not shown in fig. 3. This specific construction provides a simple and efficient meat slicing apparatus according to the invention.

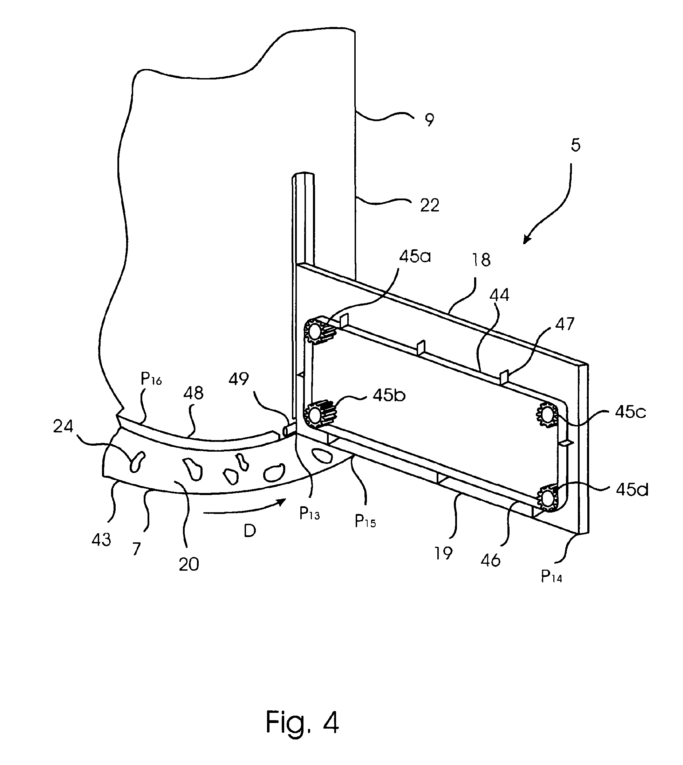

Fig. 4 shows the remover 5 in contact with the outer surface 22 of the meat structure 9. The remover 5 is shown with a meat conveyor 44 located on the side of the rectangular plate 18 facing toward the cutting means 4 (not shown). The arrow D indicated the direction of rotation of the supporting plate 7, which means that the meat slices 24 will be rotated toward the meat conveyor 44.

The sweeping edge 19 of the rectangular plate 18 extends from point P₁₃ to point P₁₄, which is at least the same distance as the distance from the outer surface of the rod 8 to the periphery 43 of the supporting plate 7, which is the maximum sweeping area. The shown sweeping area in fig. 4 extends from point P₁₃ to point P₁₅ and will be able to sweep all meat slices 24 deposited on the upper surface 20 of the supporting plate 7 out over the periphery 43 of the supporting plate 7.

The meat conveyor 44 is shown as a simple belt conveyor rotating around four gear wheels 45a,45b,45c,45d, however other conveyors providing the same effect is also contemplated within the scope of the present invention. In order to improve the removal of the meat slices 24 the belt 46 of the belt conveyor 44 is provided with a number of partitions 47 at suitable intervals.

The lowermost part 48 of the meat structure 9 is not cut off by the cutting blade 11 as it only cut down to a point P₁₆ just above the supporting plate 7. The remover 5 is provided with a scraping means 49 located on the plate 18 at the intersection between the outer surface 22 of the meat structure 9 and the supporting plate 7 so that this lowermost part 48 is scraped off the meat structure 9 as the meat structure 9 rotates pass the remover 5.

Fig. 5 shows the remover 5 with the same pivoting rod 40 and pivot axis Y as shown in figs. 2 and 3. Fig. 5 shows the first displacement means, which is attached to the side of the rectangular plate 18 that faces in the direction towards the broiler 26.

The first displacement means comprises a fifth motor 50 for displacing the rectangular plate 18 towards and away from the meat structure 9. Two support rods 51,52 are fixedly attached to the pivoting rod 40. The fifth motor 50 is attached to the pivoting rod 40 and is also suspended from the two support rods 51,52 by means of suspension rods 53,54 extending between the two support rods 51,52. The first displacement means also comprises a displacement rod 55 that is powered by the fifth motor 50 to displace the rectangular plate 18 towards and away from the meat structure 9. The displacement rod 55 engages a horizontal plate 56 attached to the rectangular plate 18, where the horizontal plate 18 defines a meat contacting edge of the remover 5 as it is in contact the outer surface 22 of the meat structure 9 during use of the apparatus.

The remover 5 shown in fig. 5 is provided with a pressure sensor 57 attached to the supporting rod 52. A pressure rod 58 extends between the sensor 57 and the upper part of the horizontal plate 56, where this upper part defines a pressure plate 72. The pressure plate, to which the pressure rod 58 is attached, can also be a plate separate from the horizontal plate 56, in which case the pressure plate is directly attached on the rectangular plate 18 at the meat contacting edge.

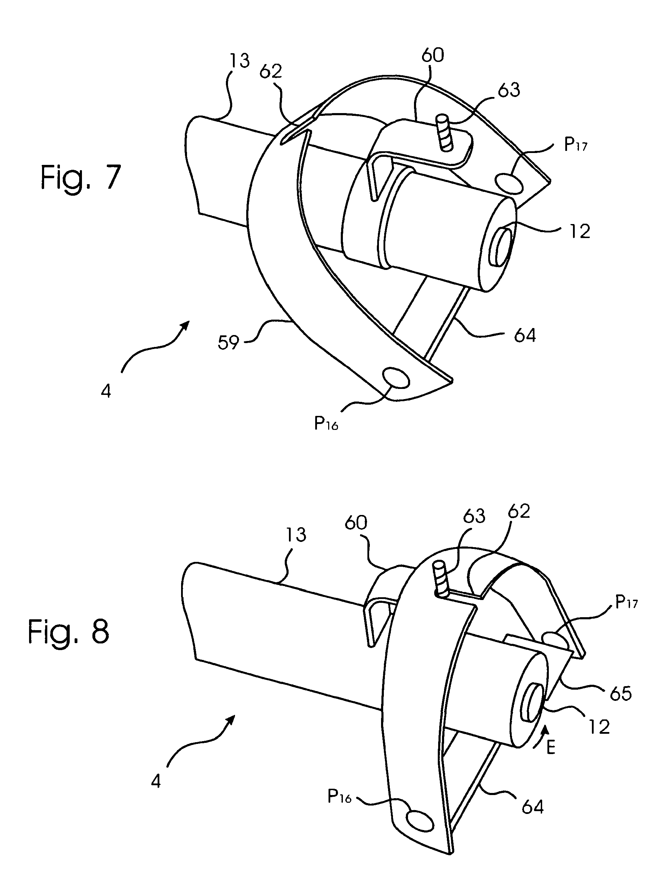

Fig. 6 shows the cutting means 4 with a shield 59 (meat deflector member) in its active position. The shield 59 is attached to the pipe 13 by means of an arm 60 that is detachably attached to the pipe 13 to make cleaning more easy. The shield 59 has the form of an oblong plate encircling the cutting edge 61 of the cutting blade 11. Both ends of the shield 59 are via an arm 64 (shown in figs. 7 and 8) pivotally mounted on the pipe 13 at points P₁₆ and P₁₇ . The shield 59 has an indentation 62 that engages with a locking mechanism attached to the arm 60. The locking mechanism has a threaded rod 63, which together with a threaded nut (not shown) is able to lock the shield 59 in its active position.

Meat and fat that hit the shield 59 or meat deflector member will to some degree under the influence of gravity fall onto the supporting plate and subsequently be removed by the remover.

Fig. 7 shows the same as in fig. 6, but with the shield 59 in its inactive position where it is turned away from the blade 11 so that it is easy to exchange the cutting blade 11 and/or to clean the cutting means 4. The blade 11 is omitted for illustrative purposes.

Fig. 8 shows another embodiment of the cutting means 4, where an additional shield (meat deflector member) in the form of a horizontal plate 65 is detachable attached to the arm 64. As the cutting blade 11 turns in the clockwise direction indicated by arrow E the majority of meat and fat being slung by the cutting blade 11 will hit the horizontal plate 65 on its bottom side from where it under the influence of gravity fall downwards onto the supporting plate 7 (or the transport conveyor 23).

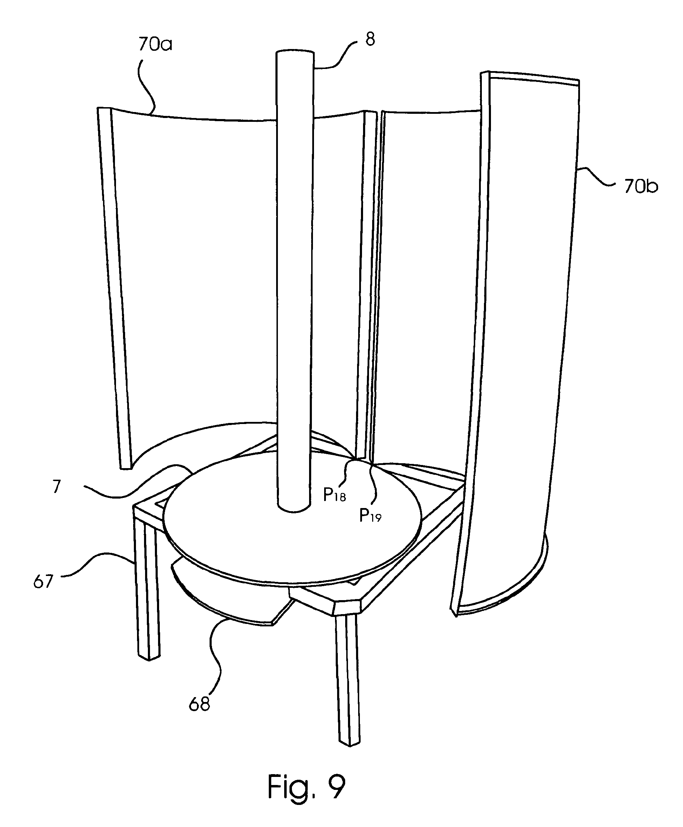

Fig. 9 shows a preferred embodiment of the preparation unit 66 for shaping the meat structure 9 on the meat holder 2. The preparation starts by placing the meat holder 2 on a preparation table 67 with a drip off channel 68, where after the two interconnected compartment parts 70a,70b (shown in their open position), which are pivotally connected to the table 67 at points P₁₈ and P₁₉, are closed around the meat holder 2, so that a cylindrical shaped moulding cavity with the supporting plate 7 as the bottom is obtained with the rod 8 in the center.

Meat is poured into the molding cavity from above and subsequently freezed or at least cooled in order to get a coherent meat structure 9. Support beams can be inserted at the top of the moulding cavity in such a way that they extend horizontally between the rod and the inner surface of the compartment parts 70a,70b, which helps in keeping the compartment parts 70a,70b in place during the preparation of the meat structure 9, so that the outer surface 22 of the meat structure 9 becomes as straight as possible.

After the freezing/cooling the compartment parts 70a,70b are turned into the open position, and the meat holder 2 with the frozen or cooled meat structure 9 are moved from the preparation table 67 to its position on the frame 6 of the meat slicing apparatus 1.

Modifications and combinations of the above principles and designs are foreseen within the scope of the present invention.

## Claims

1. A meat slicing apparatus (1) comprising:
- a rotating meat holder (2) comprising a supporting plate (7) with a rod (8) for securing a meat structure (9), where the rod (8) has a first end attached to the plate (7),
- a broiler (26) with at least one heating section (3a, 3b, 3c) facing the meat structure (9) for broiling the rotating meat structure (9), and
- a cutting means (4) for cutting slices of meat (24) from the rotating meat structure (9), which slices (24) deposit on the surface (20) of the supporting plate (7) below the cutting means (4),
**characterized in that** the apparatus (1) further comprises:
- a remover (5, 18) for removing the deposited meat slices (24) from the supporting plate (7) by sweeping at least a circumferential area of the supporting plate (7) during rotation of the meat structure (9), where the sweeping area extends from the outer surface (22) of the meat structure (9) towards the periphery (43) of the plate (7),
- the remover (5, 18) has a sweeping edge (19) positioned at a predetermined fixed distance to the supporting plate (7) during rotation of the meat structure (9), and
- a first displacement means (50, 51, 52, 53, 54, 55, 56) adapted to keep the remover in contact with the meat structure (9) during rotation of the meat structure (9).

2. The meat slicing apparatus (1) according to claim 1, **characterized in that** the sweeping area extends from the outer circumferential surface (22) of the meat structure (9) and at least to the periphery (43) of the supporting plate (7).

3. The meat slicing apparatus (1) according to claim 1 or 2, **characterized in that** the remover (5, 18) comprises a meat conveyor (44) moving along at least the sweeping edge (19) of the remover (5, 18).

4. The meat slicing apparatus (1) according to claim 1, 2 or 3, **characterized in that** the displacement of the first displacement means (50, 51, 52, 53, 54, 55, 56) is based on data from a sensor (39, 57) detecting the distance between the remover (5, 18) and the meat structure (9).

5. The meat slicing apparatus (1) according to claim 4, **characterized in that** the sensor (57) is a pressure sensor measuring the pressure exerted on the sensor (57) by the meat structure (9).

6. The meat slicing apparatus (1) according to any of claim 1 - 5, **characterized in that** the remover (5, 18) comprises a scraping means (49) for scraping off slices of meat (24) from the rotating meat structure (9), and where the scraping means (49) is located at the part of the sweeping edge (19) closest to the meat structure (9) during use.

7. The meat slicing apparatus (1) according to any of claim 1 - 6, **characterized in that** the size of the supporting plate (7) is adapted so that its periphery (43) extends beyond the outer surface (22) of the meat structure (9).

8. The meat slicing apparatus (1) according to any of claim 1 - 7, **characterized in that** the apparatus (1) comprises a transport conveyor (23) for receiving the meat slices (24) from the remover (5, 18) and transporting the meat slices (24) to a receptacle (25).

9. The meat slicing apparatus (1) according to any of claim 1 - 8, **characterized in that** the cutting means (4) comprises a rotating cutting blade (11) having a cutting edge (61) at least partly encircled by a shield (59) or a meat deflector member.

10. The meat slicing apparatus (1) according to claim 10, **characterized in that** the shield (59) is pivotally mounted.

11. The meat slicing apparatus (1) according to any of claim 1 - 10, **characterized in that** the broiler (26) comprises:
- at least two heating sections (3a, 3b, 3c) positioned next to each other around the meat structure (9), and
- means (41a, 41b) for controlling the angle between the at least two heating sections (3a, 3b, 3c).

12. The meat slicing apparatus (1) according to any of claim 1 - 11, **characterized in that** the apparatus (1) comprises a control system for individual adjustment or simultaneous adjustment of one or more of the distance between the meat structure (9) and the broiler (26), the distance between the meat structure (9) and the cutting means (4), and the distance between the meat structure (9) and the remover (5, 18).

13. The meat slicing apparatus (1) according to any of claim 1 - 12, **characterized in that** the meat slicing apparatus (1) comprises
- a second displacement means (29, 30a, 30b) for displacing the cutting means (4) towards the rotating meat structure (9), and/or
- a third displacement means (35, 37a, 37b)) for moving the broiler (26) towards the rotating meat structure (9).

14. A method for slicing meat using the meat slicing apparatus (1) according to any of the preceding claims 1 - 12, **characterized in that** the method comprises the steps of:
- placing the meat holder (2) with a meat structure (9) on a rotating means (27),
- moving any of the broiler (26), the cutting means (4) and the remover (5, 18) to their start positions, and
- activating any of the rotating means (4), the broiler (26), the cutting means (4) and/or the remover (5, 18).

15. A method according to claim 14, **characterized in that** the method further comprises initial preparation of the meat structure (9) by the steps:
- providing a preparation unit (66) for shaping the meat structure (9), which preparation unit (66) comprises at least two pivotally interconnected compartment parts (70a, 70b),
- placing the meat holder (2) inside the preparation unit (66),
- closing the interconnected compartment parts (70a, 70b) around the meat holder (2) so that the supporting plate (7) defines the base of a moulding cavity wherein the rod (8) extends,
- adding meat for the meat structure (9) into the moulding cavity,
- optionally freezing or at least cooling the meat in order to obtain a coherent meat structure (9), and
- moving the interconnected compartment parts (70a, 70b) to an open position and removing the frozen meat structure (9) and the meat holder (2).

## Patentansprüche

1. Eine Fleischschneidvorrichtung (1) mit:
- einem sich drehenden Fleischhalter (2) mit einer Trageplatte (7) mit einer Stange (8) zum Halten eines Fleischgefüges (9), wobei die Stange (8) ein erstes Ende hat, das an der Platte (7) angebracht ist,
- eine Grilleinrichtung (26) mit wenigstens einem zu dem Fleischgefüge (9) weisenden Heizabschnitt (3a, 3b, 3c) zum Grillen des sich drehenden Fleischgefüges (9) und
- Schneidmittel (4) zum Anschneiden von Fleischstücken (24) aus dem sich drehenden Fleischgefüge (9), wobei die Stücke (24) sich auf der Fläche (20) der Stützplatte (7) unterhalb des Schneidmittels (4) ablegen,
**dadurch gekennzeichnet, dass** die Vorrichtung (1) weiter aufweist:
- einen Abstreifer (5, 18) zum Entnehmen der abgelegten Fleischstücke (24) von der Tragplatte (7) durch Überstreichen wenigstens eines Umfangsbereichs der Trageplatte (7) während der Drehung des Fleischgefüges (9), wobei der überstrichene Bereich sich von der äußeren Fläche (22) des Fleischgefüges (9) hin zu dem Umfang (43) der Platte (7) erstreckt,
- der Abstreifer (5, 18) eine Streichkante (19) hat, die mit einem vorgegebenen festen Abstand von der Tragplatte (7) während der Drehung des Fleischgefüges (9) positioniert ist, und
- ein erstes Verlagerungsmittel (50, 51, 52, 53, 54, 55, 56) das eingerichtet ist zum Beibehalten des Kontakts des Abstreifers mit dem Fleischgefüge (9) während der Drehung des Fleischgefüges (9).

2. Die Fleischschneidvorrichtung (1) nach Anspruch 1, **dadurch gekennzeichnet, dass** der überstrichene Bereich sich von der äußeren umlaufenden Fläche (22) des Fleischgefüges (9) und wenigstens zu dem Umfang (43) der Tragplatte (7) erstreckt.

3. Die Fleischschneidvorrichtung (1) nach Anspruch 1 oder 2, **dadurch gekennzeichnet, dass** der Abstreifer (5, 18) einen Fleischförderer (44) aufweist, der sich wenigstens entlang der Streichkante (19) des Abstreifers (5, 18) bewegt.

4. Die Fleischschneidvorrichtung (1) nach Anspruch 1, 2 oder 3, **dadurch gekennzeichnet, dass** die Verlagerung des ersten Verlagerungsmittels (50, 51, 52, 53, 54, 55, 56) auf Daten eines Sensors (39, 57) basiert, die den Abstand zwischen dem Abstreifer (5, 18) und dem Fleischgefüge (9) erkennt.

5. Die Fleischschneidvorrichtung (1) nach Anspruch 4, **dadurch gekennzeichnet, dass** der Sensor (57) ein Drucksensor ist, der den Druck misst, der von dem Fleischgefüge (9) auf den Sensor (57) durch aufgebracht wird.

6. Die Fleischschneidvorrichtung nach einem der Ansprüche 1 - 5, **dadurch gekennzeichnet, dass** der Abstreifer (5, 18) einen Schaber (49) zum Abschaben von Fleischstücken (25) von dem sich drehenden Fleischgefüge (9) aufweist, wobei der Schaber (49) an dem Teil der Streichkante (19), die während der Verwendung dem Fleischgefüge (9) am nächsten ist, angeordnet ist.

7. Die Fleischschneidvorrichtung (1) nach einem der Ansprüche 1 - 6, **dadurch gekennzeichnet, dass** die Größe der Tragplatte (7) derart angepasst ist, dass sich deren Umfang (43) über die äußere Fläche (22) des Fleischgefüges (9) erstreckt.

8. Die Fleischschneidvorrichtung (1) nach einem der Ansprüche 1 - 7, **dadurch gekennzeichnet, dass** die Vorrichtung (1) ein Transportband (23) aufweist zum Aufnehmen der Fleischstücke (24) von dem Abstreifer (5, 18) und Transportieren der Fleischstücke (24) zu einer Aufnahme (25).

9. Die Fleischschneidvorrichtung (1) nach einem der Ansprüche 1 - 8, **dadurch gekennzeichnet, dass** das Schneidmittel (4) ein sich drehendes Schneidblatt (11) aufweist mit einer Schneidkante (61), die wenigstens teilweise von einem Schild (59) oder einem Fleischabweiser umgeben wird.

10. Die Fleischschneidvorrichtung (1) nach Anspruch 10, **dadurch gekennzeichnet, dass** das Schild (95) drehbar montiert ist.

11. Die Fleischschneidvorrichtung (1) nach einem der Ansprüche (10), **dadurch gekennzeichnet, dass** das Grillgerät (26) aufweist:
- wenigstens zwei Heizabschnitte (3a, 3b, 3c), die nahe zueinander um das Fleischgefüge (9) herum positioniert sind, und
- Mittel (41a, 41b) zum Einstellen des Winkels zwischen den wenigstens beiden Heizabschnitten (3a, 3b, 3c).

12. Die Fleischschneidvorrichtung (1) nach einem der Ansprüche 1 - 11, **dadurch gekennzeichnet, dass** die Vorrichtung (1) ein Steuersystem zum individuellen Einstellen oder simultanen Einstellen eines oder mehrerer der Abstände zwischen dem Fleischgefüge (9) und dem Grillgerät (26), dem Abstand zwischen dem Fleischgefüge (9) und dem Schneidmittel (4) und dem Abstand zwischen dem Fleischgefüge (9) und dem Abstreifer (5, 18) aufweist.

13. Die Fleischschneidvorrichtung (1) nach einem der Ansprüche 1 - 12, **dadurch gekennzeichnet, dass** die Fleischschneidvorrichtung (1) aufweist:
- ein zweites Lagerungsmittel (29, 30a, 30b) zum Verlagern des Schneidmittels (4) in Richtung auf das sich drehende Fleischgefüge (9) und/oder
- ein drittes Verlagerungsmittel (35, 37a, 37b) zum Bewegen des Grillgeräts (26) in Richtung auf das sich drehende Fleischgefüge (9).

14. Ein Verfahren zum Schneiden von Fleisch unter Verwendung einer Fleischschneidvorrichtung nach einem der vorangehenden Ansprüche 1 - 12, **dadurch gekennzeichnet, dass** das Verfahren die folgenden Schritte aufweist:
- Anordnen des Fleischhalters (2) mit einem Fleischgefüge (9) auf einem Rotationsmittel (27),
- Bewegen des Grillgeräts (26), des Schneidmittels (4) oder des Abstreifers (5, 18) in ihre Ausgangspositionen, und
- Aktivieren des Rotationsmittels (4), des Grillgeräts (26), des Schneidmittels (4) und/oder des Abstreifers (5, 18).

15. Ein Verfahren nach Anspruch 14, **dadurch gekennzeichnet, dass** das Verfahren weiter eine anfängliche Vorbereitung des Fleischgefüges (9) mit den folgenden Schritten aufweist:
- Vorsehen einer Vorbereitungseinheit (26) zum Formen des Fleischgefüges (9), wobei die Vorbereitungseinheit (66) wenigstens zwei drehbar miteinander verbindende Kammerteile (70a, 70b) hat,
- Anordnen des Fleischhalters (2) im Inneren der Vorbereitungseinheit (66),
- Schließen der miteinander verbundenen Kammerteile (70, 70a, 70b), um den Fleischhalter (2) derart, dass die Stützplatte (7) die Basis einer Formungsausnehmung, in der sich die Stange (8) erstreckt, definiert,
- Zufügen von Fleisch zu dem Fleischgefüge (9) in der Formungsausnehmung,
- optionales Einfrieren oder wenigstens Kühlen des Fleisches um ein coherentes Fleischgefüge (9) zu gewinnen,
- Bewegen der miteinander verbundenen Kammerteile (70a, 70b) in eine offene Position und Entnehmen des gefrorenen Fleischgefüges (9) und des Fleischhalters (2).

## Revendications

1. Appareil (1) pour trancher de la viande, comprenant :
- un dispositif de maintien rotatif pour la viande (2) comprenant une plaque de support (7) munie d'une tige (8) pour fixer une structure de viande (9), une première extrémité de la tige (8) étant fixée à la plaque (7) ;
- un gril (26) dont au moins une section de chauffage (3a, 3b, 3c) est tournée vers la structure de viande (9) pour griller la structure de viande rotative (9) ; et
- un moyen de découpe (4) pour découper des tranches de viande (24) à partir de la structure de viande rotative (9), lesdites tranches (24) venant se disposer sur la surface (20) de la plaque de support (7) en dessous du moyen de découpe (4) ;
**caractérisé en ce que** l'appareil (1) comprend en outre :
- un dispositif d'enlèvement (5, 18) pour retirer de la plaque de support (7) les tranches de viande déposées (24) en balayant au moins une zone circonférentielle de la plaque de support (7) lors de la rotation de la structure de viande (9), la zone de balayage s'étendant depuis la surface externe (22) de la structure de viande (9) jusqu'à la périphérie (43) de la plaque (7) ;
- le dispositif d'enlèvement (5, 18) possède un bord de balayage (19) situé à une distance fixe prédéterminée par rapport à la plaque de support (7) lors de la rotation de la structure de viande (9) ; et
- un premier moyen de déplacement (50, 51, 52, 53, 54, 55, 56) conçu pour maintenir le dispositif d'enlèvement en contact avec la structure de viande (9) lors de la rotation de la structure de viande (9).

2. Appareil (1) pour trancher de la viande selon la revendication 1, **caractérisé en ce que** la zone de balayage s'étend depuis la surface circonférentielle externe (22) de la structure de viande (9) et au moins jusqu'à la périphérie (43) de la plaque de support (7).

3. Appareil (1) pour trancher de la viande selon la revendication 1 ou 2, **caractérisé en ce que** le dispositif d'enlèvement (5, 18) comprend un convoyeur (44) pour la viande, qui se déplace au moins le long du bord de balayage (19) du dispositif d'enlèvement (5, 18).

4. Appareil (1) pour trancher de la viande selon la revendication 1, 2 ou 3, **caractérisé en ce que** le déplacement du premier moyen de déplacement (50, 51, 52, 53, 54, 55, 56) se base sur des données émises par un capteur (39, 57) qui détecte la distance séparant le dispositif d'enlèvement (5, 18) de la structure de viande (9).

5. Appareil (1) pour trancher de la viande selon la revendication 4, **caractérisé en ce que** le capteur (57) est un capteur de pression qui mesure la pression qu'exerce sur le capteur (57) la structure de viande (9).

6. Appareil (1) pour trancher de la viande selon l'une quelconque des revendications 1 à 5, **caractérisé en ce que** le dispositif d'enlèvement (5, 18) comprend un moyen de raclage (49) pour retirer par raclage des tranches de viande (24) de la structure de viande rotative (9), et dans lequel le moyen de raclage (49) est situé dans la partie du bord de balayage (19) la plus proche de la structure de viande (9) en état de marche.

7. Appareil (1) pour trancher de la viande selon l'une quelconque des revendications 1 à 6, **caractérisé en ce que** la dimension de la plaque de support (7) est conçue de telle sorte que sa périphérie (43) s'étend au-delà de la surface externe (22) de la structure de viande (9).

8. Appareil (1) pour trancher de la viande selon l'une quelconque des revendications 1 à 7, **caractérisé en ce que** l'appareil (1) comprend un convoyeur de transport (23) destiné à recevoir les tranches de viande (24) à partir du dispositif d'enlèvement (5, 18) et à transporter les tranches de viande (24) jusqu'à un récipient (25).

9. Appareil (1) pour trancher de la viande selon l'une quelconque des revendications 1 à 8, **caractérisé en ce que** le moyen de découpe (4) comprend une lame de coupe rotative (11) possédant un bord tranchant (61) encerclé au moins en partie par un écran (59) ou par un membre faisant office de déflecteur pour la viande.

10. Appareil (1) pour trancher de la viande selon la revendication 9, **caractérisé en ce que** l'écran (59) est monté en pivotement.

11. Appareil (1) pour trancher de la viande selon l'une quelconque des revendications 1 à 10, **caractérisé en ce que** le gril (26) comprend :
- au moins deux sections de chauffage (3a, 3b, 3c) qui sont disposées l'une à côté de l'autre autour de la structure de viande (9) ; et
- des moyens (41a, 41b) pour régler l'ongle formé entre lesdites au moins deux sections de chauffage (3a, 3b, 3c).

12. Appareil (1) pour trancher de la viande selon l'une quelconque des revendications 1 à 11, **caractérisé en ce que** l'appareil (1) comprend un système de commande pour le réglage individuel ou le réglage simultané d'un ou de plusieurs éléments choisis parmi le groupe comprenant : la distance séparant la structure de viande (9) et le gril (26), la distance séparant la structure de viande (9) et le moyen de découpe (4) et la distance séparant la structure de viande (9) et le dispositif d'enlèvement (5, 18).

13. Appareil (1) pour trancher de la viande selon l'une quelconque des revendications 1 à 12, **caractérisé en ce que** l'appareil (1) pour trancher de la viande comprend :
- un deuxième moyen de déplacement (29, 30a, 30b) pour déplacer le moyen de découpe (4) en direction de la structure de viande rotative (9) ; et/ou
- un troisième moyen de déplacement (35, 37a, 37b) pour déplacer le gril (26) en direction de la structure de viande rotative (9).

14. Procédé pour trancher de la viande en utilisant l'appareil (1) pour trancher de la viande selon l'une quelconque des revendications 1 à 12, **caractérisé en ce que** le procédé comprend les étapes consistant à :
- placer le dispositif de maintien (2) pour la viande muni d'une structure de viande (9) sur un moyen rotatif (27) ;
- mettre dans leur position de départ l'un quelconque des éléments choisis parmi le groupe comprenant le gril (26), le moyen de découpe (4) et le dispositif d'enlèvement (5, 18) ; et
- activer l'un quelconque des éléments choisis parmi le groupe comprenant le moyen rotatif (27), le gril (26), le moyen de découpe (4) et/ou le dispositif d'enlèvement (5, 18).

15. Procédé selon la revendication 14, **caractérisé en ce que** le procédé comprend en outre la préparation initiale de la structure de viande (9) via les étapes consistant à :
- procurer une unité de séparation (66) pour confectionner la structure de viande (9), ladite unité de préparation (66) comprenant au moins deux parties de compartiment reliées l'une à l'autre en pivotement (70a, 70b) ;
- placer le dispositif de maintien (2) pour la viande à l'intérieur de l'unité de préparation (66) ;
- refermer les parties de compartiment (70a, 70b) reliées l'une à l'autre, autour du dispositif de maintien (2) pour la viande, de telle sorte que la plaque de support (7) définit la base d'une cavité de moulage dans laquelle s'étend la tige (8) ;
- ajouter de la viande pour la structure de viande (9) dans la cavité de moulage ;
- le cas échéant congeler ou au moins refroidir la viande afin d'obtenir une structure de viande cohérente (9) ; et
- amener les parties de compartiment (70a, 70b) reliées l'une à l'autre dans une position ouverte et retirer la structure de viande congelée (9) et le dispositif de maintien (2) pour la viande.
